Europäisches Patentamt

European Patent Office

Office européen des brevets

(11) Veröffentlichungsnummer: **0 171 361**
**B1**

(12) **EUROPÄISCHE PATENTSCHRIFT**

(45) Veröffentlichungstag der Patentschrift: **13.06.90**

(21) Anmeldenummer: **85810358.3**

(22) Anmeldetag: **05.08.85**

(51) Int. Cl.⁵: **E 01 C 11/26**

(54) Heizung für Gebäudezufahrten und Garageeinfahrten und zwar besonders für solche mit Gefälle.

(30) Priorität: **07.08.84 CH 785/84**

(43) Veröffentlichungstag der Anmeldung:
**12.02.86 Patentblatt 86/07**

(45) Bekanntmachung des Hinweises auf die
Patenterteilung:
**13.06.90 Patentblatt 90/24**

(84) Benannte Vertragsstaaten:
**AT DE FR IT**

(56) Entgegenhaltungen:
**DE-A-1 459 693**
**DE-A-1 459 748**
**DE-A-2 154 564**
**DE-U-7 143 151**

(73) Patentinhaber: **Schuchardt, Horst Ernst Heinrich**
**Zentralplatz 2**
**CH-5507 Mellingen (CH)**
(73) Patentinhaber: **Santandrea, Marc G.**
**Aspstrasse 12**
**CH-8472 Seuzach-Winterthur (CH)**

(72) Erfinder: **Schuchardt, Horst Ernst Heinrich**
**Zentralplatz 2**
**CH-5507 Mellingen (CH)**
Erfinder: **Santandrea, Marc G.**
**Aspstrasse 12**
**CH-8472 Seuzach-Winterthur (CH)**

(74) Vertreter: **Schweizer, Hans**
**Bovard AG Patentanwälte VSP Optingenstrasse
16**
**CH-3000 Bern 25 (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine elektrisch heizbare Fahrbahn gemäss dem Oberbegriff des Patentanspruches 1.

Es sind Anlagen zum Beheizen von Rampen, Gebäude- und Garagezufahrten bekannt, bei denen Rohre oder Widerstandsdrähte in die Fahrbahn eingebettet sind. Zum Erwärmen der Fahrbahn wird warmes Wasser durch die Rohre geführt bzw. ein elektrischer Strom durch die Widerstandsdrähte geleitet. Eine Fahrbahn-Heizungsanlage mit warmes Wasser führenden Rohren ist beispielsweise in der deutschen Offenlegungsschrift Nr. 32 17 155 beschrieben.

In der DE-A-1 459 748 ist eine Vorrichtung zum Beheizen von Verkehrsflächen beschrieben. Bei dieser vorbekannten Ausführung wird ein elektrisches Widerstandsheizelement in einem hochverschleissfesten Deckbelag eingebettet oder darunter angeordnet. Als Heizelement wird eine elektrisch leitende Betonschicht oder eine elektrisch leitende Kunststoff-Folie eingesetzt.

Weiter ist in der DE-A-1 459 693 eine Heizverkleidung für die Installation auf Fahrbahnen beschrieben. Die Heizverkleidung umfasst eine ein elektrisches Heizelement aufweisende Platte. Das Heizelement ist in eine Schicht aus durch Polymerisation aushärtbarem Kunststoff eingebettet, der eine Glasfaserverstärkung aufweist. Zur Erhöhung der Wärmeleitfähigkeit des Kunststoffes sind metallische Teilchen mit hoher Wärmeleitfähigkeit eingebettet. Die Wärmeübertragung erfolgt vom Heizelement über die Kunststoffschicht zum auf der Platte liegenden Schnee oder Eis. Dadurch ergibt sich eine Verzögerung der Wärmeübertragung.

Die bekannten Anlagen zum Beheizen von Fahrbahnen sind träge, d.h. die Zeit, die zwischen dem Inbetriebsetzen der Anlage und dem Schmelzen des auf der Fahrbahn liegenden Schnees verstreicht, ist lang, weil eine relativ dicke Schicht der Fahrbahn erwärmt werden muss. Ausserdem ist diese Art der Beheizung mit einem hohen Energieverbrauch verbunden.

Es ist Aufgabe der Erfindung, eine heizbare Fahrbahn zu schaffen, wobei zum Schmelzen des auf der Fahrbahn liegenden Schnees und/oder Eises weniger Zeit und ein kleinerer Energieaufwand als bei den bekannten Heizanlagen benötigt wird.

Diese Aufgabe wird durch die erfindungsgemässe Fahrbahn mit den im kennzeichnenden Teil des Patentanspruches 1 angeführten Merkmalen gelöst.

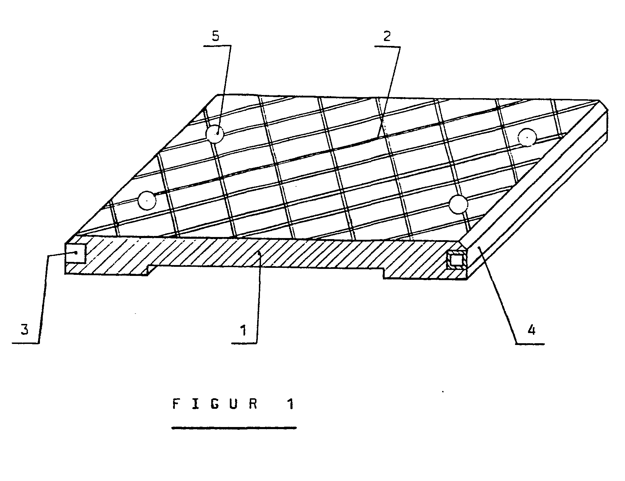

Der Erfindungsgegenstand ist nachstehend mit Bezugnahme auf die Zeichnung beispielsweise näher erläutert.

Die einzige Figur zeigt einen Teil eines Ausführungsbeispieles eines Kunststoffelementes.

Das dargestellte Ausführungsbeispiel des Kunststoffelementes 1 besitzt auf seiner Oberseite als Profilierung eine Anzahl sich kreuzender Rillen 2 oder Rippen, wodurch die Griffigkeit erhöht wird. In gegenüberliegenden Randbereichen des Kunststoffelementes 1 ist je eine nach der betreffenden Schmalseite offene Nut 3 vorhanden. Diese Nuten sind je zur Aufnahme eines metallischen Leiters 4 bestimmt, der beispielsweise ein im Querschnitt betrachtet rechteckiges Hohlprofil aus Aluminium sein kann.

Das Kunststoffelement 1 besteht aus einem elektrisch leitenden Kunststoff und mit Hilfe der metallischen Leiter 4 kann eine elektrische Spannung direkt an den elektrisch leitenden Kunststoff angelegt werden, so dass ein elektrischer Strom quer durch das Kunststoffelement 1 von dem einen Leiter zum gegenüberliegenden Leiter 4 fliesst. Durch diesen Strom wird das Kunststoffelement 1 erwärmt. Der elektrisch leitende Kunststoff ist ein Halbleiter, d.h. dessen elektrische Leitfähigkeit liegt zwischen jener der Metalle und der Isolatoren.

Das in der Figur dargestellte Kunststoffelement 1 ist rechteckförmig. Es sind aber auch entsprechend geformte und zugeschnittene Kunststoffelemente zum Bilden von Fahrbahnen in Kurven denkbar.

An die elektrischen Leiter 4 wird eine Gleich- oder Wechselspannung angelegt, die kleiner als 50 V ist. Vorzugsweise wird zum Vermeiden von Korrosionsschäden eine vom Starkstromnetz über einen Transformator gelieferte Wechselspannung verwendet. Die Leiter 4 und das Kunststoffelement 1 sind durch den genannten Transformator galvanisch vollständig gegenüber dem Stromversorgungsnetz getrennt. Weil die Stromversorgung durch eine Spannung, die kleiner als 50 V ist, erfolgt, sind elektrische Schläge, die für Mensch und Tier gefährlich sein könnten, somit ausgeschlossen.

Das als elektrischer Leiter 4 dienende Aluminiumprofil kann auch zum Befestigen der Kunststoffelemente untereinander dienen.

Das Kunststoffelement 1 weist vorzugsweise im Randbereich eine grössere Dicke als im dazwischenliegenden Bereich auf. Im Randbereich sind Oeffnungen 5 für Befestigungsmittel, beispielsweise Schrauben oder Anker, zum Verbinden des Kunststoffelementes mit der befahrbaren Oberfläche vorhanden.

Die oben beschriebenen, im wesentlichen plattenförmigen Kunststoffelemente sind relativ dünn und weisen neben ihren elektrischen Eigenschaften eine hohe mechanische Festigkeit und Verschleissfestigkeit auf. Sie sind zum direkten Montieren auf die befahrbare Oberfläche bestimmt. Im Betrieb der Kunststoffelemente werden praktisch nur dieselben und der allenfalls daraufliegende Schnee bzw. Eis erwärmt, wodurch der Energieverbrauch auf einem Minimum gehalten wird.

## Patentansprüche

1. Elektrisch heizbare Fahrbahn mit mehreren vorgefertigten, plattenförmigen, hohe mechanische Festigkeit und Verschleissfestigkeit aufweisenden Kunststoffelementen zum wenigstens teilweisen Belegen der befahrbaren Oberfläche der Fahrbahn, insbesondere Zufahrten von Gebäuden, dadurch gekennzeichnet, dass jedes der Kunststoffelemente aus einem elektrisch leitenden Kunststoff hergestellt ist, dass zum Anlegen einer elektrischen Spannung an das Kunststoffelement in den gegenüberliegenden Schmalseiten des Kunststoffelementes eine, nach der betreffenden Schmalseite des Kunststoffelementes offene Nut (3) vorhanden ist und dass der elektrische Leiter (4) in der Nut angeordnet ist.

2. Fahrbahn nach Anspruch 1, dadurch gekennzeichnet, dass der elektrische Leiter ein Aluminiumprofil ist.

3. Fahrbahn nach Anspruch 1 oder 2, dadurch gekennzeichnet, dass die die elektrischen Leiter aufweisenden Randbereiche dicker ausgebildet sind als der dazwischenliegende Teil des Kunststoffelementes.

4. Fahrbahn nach einem der Ansprüche 1 bis 3, dadurch gekennzeichnet, dass im Randbereich des Kunststoffelementes Oeffnungen (5) zum Befestigen des Kunststoffelementes an der befahrbaren Oberfläche mit Hilfe von Befestigungsmitteln vorhanden sind.

## Revendications

1. Chaussée chauffable électriquement comprenant plusieurs éléments synthétiques préfabriqués, en forme de plaques, à haute résistance mécanique et résistance à l'usure, pour être disposés sur au moins une partie de la surface supérieure praticable de chaussées, en particulier des accès d'immeubles, caractérisée en ce que chacun des éléments synthétiques est fait en un matériau synthétique électriquement conducteur, que pour appliquer une tension électrique à l'élément synthétique, sur les petits côtés opposés de l'élément synthétique, une rainure (3) est prévue, ouverte vers le petit côté en question de l'élément synthétique et que le conducteur électrique (4) est disposé dans la rainure.

2. Chaussée selon la revendication 1, caractérisée en ce que le conducteur électrique est un profilé d'aluminium.

3. Chaussée selon la revendication 1 ou 2, caractérisée en ce que les régions du bord comprenant les conducteurs électriques sont plus épaisses que la partie de l'élément synthétique situé entre elles.

4. Chaussée selon l'une des revendications 1 à 3, caractérisée en ce que des ouvertures (5), dans les régions de bord de l'élément synthétique, sont prévues pour la fixation de l'élément synthétique à la surface supérieure praticable à l'aide de moyens de fixation.

## Claims

1. Electrically heatable roadway in the form of plate-shaped, elements of synthetic material having high mechanical strength and abrasion resistance for at least partial covering of the practicable surface of the roadway, in particular approach roads to buildings, characterized in that each of the elements of synthetic material is fabricated from an electrically conductive synthetic material, in that for establishing an electric voltage to the plastic element there is in the opposite narrow sides of the elements of synthetic material a channel (3) open toward the respective narrow side of the plastic element and in that the electric conductor (4) is disposed in the channel.

2. Roadway according to claim 1, characterized in that the electric conductor is an aluminium profile.

3. Roadway according to claim 1 or 2, characterized in that the edge areas exhibiting the electric conductors are more thickly formed than the part lying inbetween.

4. Roadway according to one of the claims 1 to 3, characterized in that there are openings (5) in the edge area of the plastic element to fasten the plastic element to the practicable surface with the aid of a fastening means.

F I G U R   1

1